Europäisches Patentamt

European Patent Office

Office européen des brevets

(11) Veröffentlichungsnummer : **0 412 142 B1**

# (12) EUROPÄISCHE PATENTSCHRIFT

(45) Veröffentlichungstag der Patentschrift :
**10.02.93 Patentblatt 93/06**

(51) Int. Cl.⁵ : **F24H 7/02**

(21) Anmeldenummer : **90903016.5**

(22) Anmeldetag : **09.02.90**

(86) Internationale Anmeldenummer :
**PCT/EP90/00205**

(87) Internationale Veröffentlichungsnummer :
**WO 90/10181 07.09.90 Gazette 90/21**

(54) **WÄRMESPEICHER MIT CHEMISCHEN FESTSTOFF/GASSPEICHERREAKTIONEN.**

(30) Priorität : **22.02.89 DE 3905346**

(43) Veröffentlichungstag der Anmeldung :
**13.02.91 Patentblatt 91/07**

(45) Bekanntmachung des Hinweises auf die
Patenterteilung :
**10.02.93 Patentblatt 93/06**

(84) Benannte Vertragsstaaten :
**DE ES IT**

(56) Entgegenhaltungen :
**US-A- 3 987 786**
**US-A- 4 535 837**

(73) Patentinhaber : **DEUTSCHE**
**FORSCHUNGSANSTALT FÜR LUFT- UND**
**RAUMFAHRT e.V.**
**W-5300 Bonn (DE)**

(72) Erfinder : **TAMME, Rainer**
**Granitweg 5**
**W-7302 Ostfildern 2 (DE)**
Erfinder : **KANWISCHER, Herbert**
**Honigwiesenstra e 33**
**W-7000 Stuttgart 80 (DE)**

(74) Vertreter : **Hoeger, Stellrecht & Partner**
**Uhlandstrasse 14 c**
**W-7000 Stuttgart 1 (DE)**

## Beschreibung

Die Erfindung betrifft einen Wärmespeicher, arbeitend mit chemischen Feststoff/Gas-Speicherreaktionen, umfassen ein in einem Behälter angeordnetes Feststoff/Gas-Reaktions-Speichermaterial , welches mittels eines Wärmeträgergases aufladbar und entladbar ist und dabei durch chemische Reaktion eine Reaktionskomponente freisetzt bzw. aufnimmt.

Bei bisher konzipierten derartigen Speichern mit chemischen Speicherreaktionen wurde bislang ein Wärmeträgerkreislauf für das Laden und Entladen des Speichers vorgesehen, der Transport der Reaktionskomponente jedoch von dem Kreislauf des Wärmeträgergases getrennt. Diese Lösungen haben alle den Nachteil, daß sie hohe Verluste an Nutzenergie, zusätzliche Hilfsenergie, einen erheblichen Materialaufwand und schließlich noch einen reduzierten Füllfaktor nach sich ziehen, so daß derartige chemische Speicher letztlich wirtschaftlich uninteressant sind.

Der Erfindung liegt daher die Aufgabe zugrunde, einen Wärmespeicher mit chemischen Feststoff/Gasspeicherreaktionen derart zu verbessern, daß dieser wirtschaftlich interessant ist, d.h. also insbesondere mit möglichst geringem konstruktivem Aufwand realisiert werden kann und außerdem geringe Verluste an Nutzenergie aufzuweisen hat.

Diese Aufgabe wird bei einem Wärmespeicher der eingangs beschriebenen Art erfindungsgemäß dadurch gelöst, daß das Speichermaterial in dem Behälter ständig in einer zum Wärmeträgergas hin offenen Stützstruktur als portionierte Konfiguration und direkt vom Wärmeträgergas umströmt angeordnet ist und die Reaktionskomponente in den vom Wärmeträgergas durchströmten Raum abgibt bzw. aus diesem aufnimmt.

Damit wurde insbesondere der eingangs beschriebene Verlust an Nutzenergie vermieden. Außerdem wurde eine konstruktiv sehr einfache Lösung geschaffen, die zusätzlich noch einen hohen Füllfaktor zuläßt.

Um einen effektiven Austausch der Reaktionskomponente mit dem Wärmeträgergas zu gewährleisten, ist erfindungsgemäß vorgesehen, daß das in der portionierten Konfiguration angeordnete Speichermaterial in einer zum Wärmeträgergas hin offenen Stützstruktur angeordnet ist. Diese Stützstruktur bietet dabei die Möglichkeit, das Speichermaterial so anzuordnen, daß es zum Wärmeträgergas hin eine möglichst große Oberfläche aufweist und somit auch bei größten Volumen- und Beschaffenheitsänderungen ein effektiver Austausch der Reaktionskomponente möglich ist.

Aus der DE-A-31 30 671 ist zwar ein Zeolith-Speicher bekannt, bei welchem ein direktes Umströmen des Speichermaterials erfolgt. Die Zeolith-Speicher sind jedoch Adsorptions/Desorptionsspeicher und keine chemischen Speicher.

Das charakteristische für chemische Speicher sind signifikante Masse- und Volumenänderungen bei der jeweiligen Lade- und Entladereaktion. Beispielsweise liegen die Volumenänderungen in Größenordnungen zwischen 25 bis 55 %. Damit geht eine Änderung der physischen Beschaffenheit des Speichermaterials einher. Ein Granulat, wie es bei Zeolith-Speichern Verwendung findet, wäre bei Verwendung als Schnittgut nach wenigen Zyklen zu einem Block kompaktiert.

Eine konstruktiv besonders einfache und vorteilhafte Variante einer derartigen, zum Wärmeträgergas offenen Stützstruktur steht vor, daß diese durch Wände abgetrennte, nebeneinanderliegende Fächer aufweist, in denen das in der portionierten Konfiguration angeordneten Speichermaterial angeordnet ist. Durch diese Fächer, die beispielsweise wabenartig oder in ähnlicher Form angeordnet sein können, läßt sich das Speichermaterial in sehr günstiger Weise vom Wärmeträgergas umströmt anordnen.

Als besonders vorteilhaft hat es sich dabei erwiesen, wenn die Fächer von Wärmeträgergas durchströmbar sind, so daß der Austausch der Reaktionskomponente nicht durch Diffusion in nur einer Richtung, sondern in mehreren Richtungen erfolgen kann.

Die einfachste konstruktive Lösung für derartige Fächer sieht vor, daß die Fächer auf gegenüberliegenden Seiten offene Durchbrüche sind, die dann entweder vollständig oder zumindest teilweise von dem Speichermaterial gefüllt sind.

Insbesondere dann, wenn die Stützstruktur mehrere Fächer aufweisende Elemente umfaßt, läßt sich die dem Wärmeträgergas ausgesetzte Oberfläche des Speichermaterials in sehr günstiger Weise vergrößern.

Dabei ist es besonders zweckmäßig, wenn die Elemente von dem Wärmeträgergas umströmt sind und dabei allseitig mit diesem in Kontakt treten können.

Eine bevorzugte Lösung sieht vor, daß die Elemente in dem Behälter im bestand voneinander angeordnet sind, so daß sie Kanäle zwischen sich bilden, durch die das Wärmeträgergas dann hindurchströmt.

Eine Möglichkeit, diese Kanäle durchströmen zu lassen, sieht vor, daß die Elemente labyrinthähnliche Kanäle für das Wärmeträgergas zwischen sich bilden, so daß sich bei einer möglichst großen Oberfläche ein effektiver Austausch der Reaktionskomponente zwischen diesem und dem Speichermaterial ergibt. Besonders vorteilhaft ist es dabei, wenn die Elemente nacheinander von dem Wärmeträgergas umströmt sind, so daß bei einer vorgegebenen Strömungsgeschwindigkeit des Wärmeträgergases ein möglichst langer Zeitraum verbleibt, während dessen ein Austausch der Reaktionskomponente zwischen dem Wärmeträgergas und dem Speichermedium erfolgen kann.

Alternativ dazu ist es aber auch möglich, daß die Elemente parallel zueinander vom Wärmeträgergas umströmt sind.

Bei den bislang beschriebenen Ausführungsbeispielen wurde nichts darüber ausgesagt, wie vorteilhafterweise die Stützstruktur ausgebildet sein soll. So ist bei einem vorteilhaften Ausführungsbeispiel denkbar, daß die Stützstruktur aus Keramikmaterial, vorzugsweise aus einer Wabenkeramik, ist.

Alternativ dazu ist es aber auch möglich, die Stützstruktur aus Metall auszubilden.

Auch bezüglich des Speichermaterials wurden bislang noch keine Angaben gemacht. So ist vorzugsweise vorgesehen, daß das Speichermaterial so beschaffen ist, daß die Reaktionskomponente bei Raumtemperatur kondensierbar ist, so daß sich diese in einfacher Art und Weise aus dem Wärmeträgergas entfernen läßt.

Besonders bevorzugte Ausführungsbeispiele sehen dabei vor, daß das Speichermaterial Alkali- oder Erdalkalioxide im geladenen oder Alkali- oder Erdalkali-Hydroxide im entladenen Zustand umfaßt, so daß die an das Wärmeträgergas abgegebene oder von diesem aufgenommene Reaktionskomponente Wasser ist.

Bei den bislang dargelegten Varianten des erfindungsgemäßen Wärmespeichers wurde nicht darauf eingegangen, wie dieser vorteilhafterweise ausgebildet sein sollte, um die Reaktionskomponente aus dem Wärmeträgergas zu entfernen oder diesem zuzuführen.

So sieht ein bevorzugtes Ausführungsbeispiel vor, daß das beim Aufladen des Speichermaterials aus dem Behälter austretende Wärmeträgergas über einen Kondensator für die Reaktionskomponente geführt ist, so daß sich mit diesem die Reaktionskomponente in einfacher Weise entfernen läßt.

Ferner ist es vorteilhaft, wenn das beim Entladen des Speichermaterials dem Behälter zugeführte Wärmeträgergas eine vor dem Behälter angeordnete Zuführeinrichtung für die Reaktionskomponente durchströmt, so daß dann über diese Zuführeinrichtung die Reaktionskomponente, beispielsweise in gasförmiger Form, dem Wärmeträgergas beigemischt werden kann, das diese dann in den Behälter transportiert.

Alternativ zu der letztgenannten Ausbildung des Wärmespeichers ist es aber auch denkbar, wenn eine Zuführvor-richtung vorgesehen ist, mit welcher die Reaktionskomponente beim Entladen in den Behälter einbringbar ist, das heißt also beispeilsweise die kondensierte Reaktionskomponente in Form eines Sprühnebels in den Behälter selbst eingebracht wird.

Um Verluste von Wärmeträgergas zu vermeiden, ist es im Rahmen der vorliegenden Erfindung besonders vorteilhaft, wenn das Wärmeträgergas in einem Kreislauf geführt ist und wenn die Reaktionskomponente in diesem Kreislauf aus dem Wärmeträgergas entfernbar bzw. diesem zufügbar ist.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:

Fig. 1 ein erstes Ausfürungsbeispiele eines erfindungsgemäßen Wärmespeichers;

Fig. 2 eine perspektivische Darstellung eines Teilschnitts durch den Wärmespeicher gemäß Fig. 1;

Fig. 3 ein zweites Ausführungsbeispiel eines erfindungsgemäßen Wärmespeichers;

Fig. 4 eine schematische Darstellung des ersten Ausführungsbeispiels des erfindungsgemäßen Wärmespeichers, ergänzt durch ein Kreislaufsystem für das Wärmeträgergas und

Fig. 5 eine Darstellung ähnlich Fig. 4 des ersten Ausführungsbeispiels, ergänzt durch eine Variante des Kreislaufsystems gemäß Fig.4.

Ein erstes Ausführungsbeispiel eines als Ganzes mit 10 bezeichneten erfindungsgemäßen Wärmespeichers umfallt einen Speicherbehälter 12, innerhalb von welchem eine als Ganzes mit 14 bezeichnete Stützstruktur zur Aufnahme eines Feststoffspeichermaterials 16 angeordnet ist. Diese Stützstruktur 14 umfaßt mehrere Elemente 18a bis e, welche in dem Speicherbehälter 12 so angeordnet sind, daß sie Zwischenwände desselben bilden, wobei zwischen einem Randbereich 20 und einer diesem zugewandten Seitenwand 22 oder 24 des Speicherbehälters 12 ein Spalt 26 oder 28 verbleibt, während die Elemente 18a bis e mit ihren übrigen Randbereichen 30 an den Seitenwänden 24, 22 oder 32 des Speicherbehälters 12 anliegen.

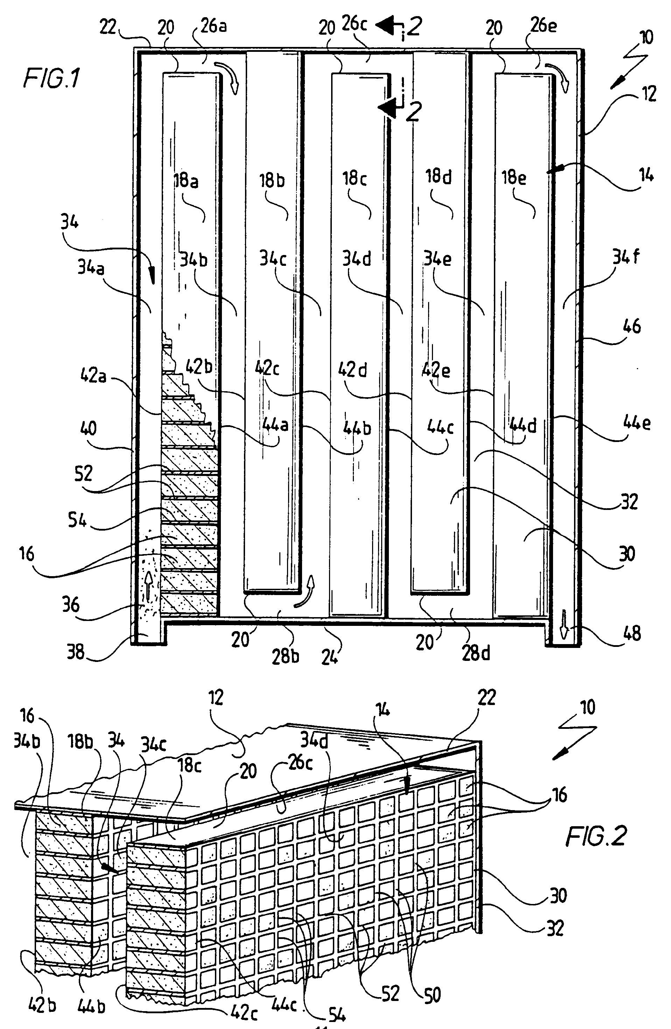

Im übrigen sind die Elemente 18a bis e parallel und im Abstand zueinander in dem Speicherbehälter 12 angeordnet, so daß - wie insbesondere in Fig. 1 und 2 zu sehen - ein zickzackförmig verlaufender Kanal 34 für ein Wärmeträgergas 36 in dem Speicherbehälter 12 gebildet wird. Ausgehend von einem ersten Anschluß 38 verläuft ein erster Abschnitt 34a des Kanals 34 zwischen einer Stirnwand 40 des Speicherbehälters 12 und einer Stirnseite 42a des Elements 18a bis zu dem Spalt 26. Im Anschluß an den Spalt 26a verläuft ein Abschnitt 34b zwischen einer der Stirnseite 42a gegenüberliegenden Stirnseite 44a des Elements 18a und einer Stirnseite 42b des Elements 18b bis zu dem Spalt 28b, nach diesem ein Abschnitt 34c zwischen der Stirnseite 44b des Elements 18b und der Stirnseite 42c des Elements 18c bis zu einem Spalt 26c, dann wieder ein Kanal 34d bis zu einem Spalt 28d und von diesem ein Kanal 34e bis zu einem Spalt 26e, von dem aus dann ein letzter Abschnitt 34 f zwischen der der Stirnwand 40 gegenüberliegenden Stirnwand 46 und der Stirnseite 44e zu einem zweiten Anschluß 48 führt.

3

Wie insbesondere aus Fig. 2 zu sehen, sind die Elemente 18a bis e so aufgebaut, daß sie eine Vielzahl parallel zueinander verlaufender Wände 50 und eine Vielzahl senkrecht zu den Wänden 50 verlaufender Wände 52 aufweisen, die dann insgesamt quaderförmige Fächer 54 bilden, die jeweils zu den Stirnseiten 42 und 44, in Fig. 2 42c und 44c hin offen sind. In diesen Fächern 54 ist dann das Speichermaterial 16 angeordnet, welches die Fächer 54 bevorzugterweise zum Teil oder vollständig ausfüllt.

Zwischen dem den Kanal 34 durchströmenden Wärmeträgergas 36 unddem Speichermaterial 56 kann damit über die Stirnseiten 42 und 44 der Elemente 18 ein Austausch der in das Wärmeträgergas 36 abzugebenden oder von dieser aufzunehmenden Reaktionskomponente erfolgen.

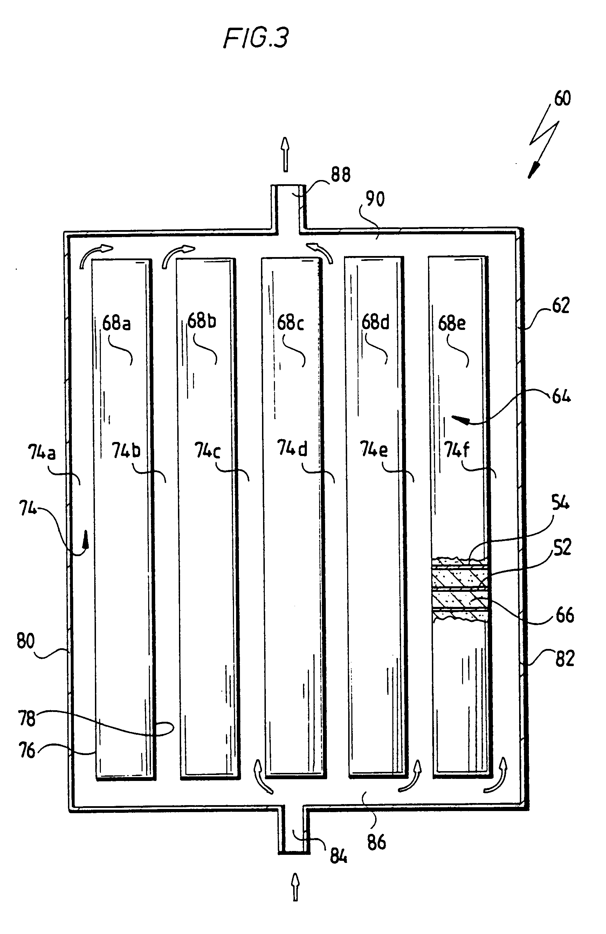

Ein als Ganzes mit 60 bezeichnetes zweites Ausführungsbeispiel des erfindungsgemäßen Wärmespeichers, dargestellt in Fig. 3, umfaßt ebenfalls einen Speicherbehälter 62, in welchem eine Stützstruktur 64 angeordnet ist, welche ebenfalls eine Vielzahl von parallel zueinander angeordneten Elementen 68 zur Aufnahme des Feststoffspeichermaterials 66 aufweist.

Im Gegensatz zum ersten ausführungsbeispiel sind die Elemente 68a bis e im Abstand voneinander derart angeordnet, daß sie eine Vielzahl parallel zueinander verlaufender Kanäle 74a bis f bilden, welche von den Stirnseiten 76 und 78 der Elemente 68a bis e und im Falle der Elemente 68a und e noch von den Stirnwänden 80 und 82 begrenzt sind und von einem mit einem ersten Anschluß 84 verbundenen ersten Querkanal 86 zu einem mit einem zweiten Anschluß 88 verbudenen zweiten Querkanal 90 führen.

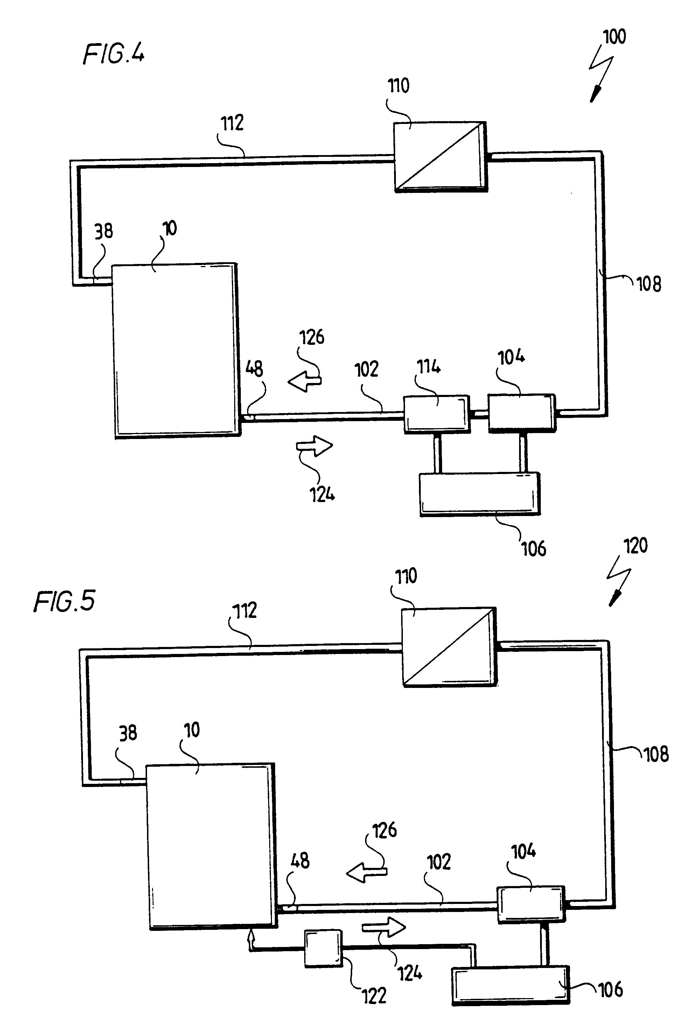

Sowohl das erste Ausführungsbeispiel 10 als auch das zweite Ausführungsbeispiel 60 des erfindungsgemäßen Wärmespeichers können noch zusätzlich, wie in Fig. 4 dargestellt, mit einem Kreislaufsystem 100 versehen sein. Der Einfachheit halber wird davon ausgegangen, daß in Fig. 4 das erste Ausführungsbeispiel 10 des erfindungsgemäßen Wärmespeichers zum Einsatz kommt.

Das Kreislaufsystem 100 führt dabei von dem zweiten Anschluß 48 des Wärmespeichers 10 mit einer Leitung 102 zu einem Kondensator 104, welcher so aufgebaut ist, daß er in der Lage ist, die in das Wärmeträgergas 36 abgegebene Reaktionskomponente auszukondensieren und in einen mit dem Kondensator 104 verbundenen Kondensatbehälter 106 abzugeben. Vorzugsweise hat dabei der Kondensator 104 gekühlte Flächen, an welchen sich die durch das Wärmeträgergas 36 mitgeführte Reaktionskomponente niederschlagen und auskondensieren kann und beispielsweise über eine Auffangwanne gesammelt und dem Kondensatbehälter 106 zugeführt werden kann.

Von dem Kondensator 104 führt eine Leitung 108 zu einer Wärme-Aus- und Einkopplungseinheit 110, welche im einfachsten Fall ein Wärmetauscher sein kann. Die Wärme-Aus- und Einkopplungseinheit 110 kann aber auch so aufgebaut sein, daß sie zwei verschiedene Wege für das Wärmeträgergas 36 aufweist, wobei ein Weg über eine Einheit zum Erhitzen des Wärmeträgergases führt und die andere über eine Einheit zum Abkühler. des Wärmeträgergases.

Von der Wärme-Aus- und Einkopplungseinheit 110 führt dann wiederum eine Leitung 112 zu dem ersten Anschluß 38 des mit einem Kreislaufsystem 100 versehenen ersten Ausführungsbeispiels 10 des erfindungsgemäßen Wärmespeichers.

Zusätzlich ist noch in die Leitung 102 ein Verdampfer 114 eingesetzt, welcher mit dem Kondensatbehälter 106 verbunden und in der Lage ist, aus diesem Kondensat der Reaktionskomponente zu entnehmen und diese dann in verdampfter Form dem in der Leitung 102 strömenden Wärmeträgergas 36 zuzuführen.

Bei einer Kombination des ersten Ausfhrungsbeispiels 10 eines erfindungsgemäßen Wärmespeichers mit einer Variante 120 des Kreislaufsystems 100 besteht der Unterschied zu letzterem darin, daß anstelle des Verdampfers 114 ein Kondensatinjektor 122 vorgesehen ist, welcher Kondensat der Reaktionskomponente aus dem Kondensatbehälter 106 entnimmt und direkt in den Speicherbehälter 12, beispielsweise in Form eines Sprühnebels, injiziert, wobei eine derartige Kondensatinjektion entweder ausschließlich im Bereich des Anschlusses 48 erfolgen kann oder an mehreren Stellen im Verlauf des Kanals 34, das heißt insbesondere im Bereich der Spalte 26 und 28, um eine gleichmäßige Kondensatverteilung in dem Speicherbehälter 12 zu erreichen.

Der mit einem Kreislaufsystem 100 oder 120 versehene erfindungsgemäße Wärmespeicher gemäß dem ersten Ausführungsbeispiel wird beim Aufladen so betrieben, daß das Wärmeträgergas 36 in dem Kreislauf in Richtung des Pfeils 124 umgewälzt wird, das heißt dem Speicherbehälter 12 durch den ersten Anschluß 38 zugeführt und über den zweiten Anschluß 48 abgeführt, dann über die Leitung 102 zum Kondensator 104, über die Leitung 108 zur Wärme-Aus- und Einkopplungseinheit 110 und dann über die Leitung 112 wierderum zum ersten Anschluß 38 geführt wird. Dabei wird durch die Wärme-Aus- und Einkopplungseinheit 110 das Wärmeträgergas 36 aufgeheizt, so daß es mit hoher Temperatur in den Speicherbehälter 12 eintritt, dort das Speichermaterial 16 aufheizt und somit dazu führt, daß dieses über die Stirnseiten 42 und 44 der Elemente 18 die Reaktionskomponente an das Wärmeträgergas direkt in den Kanal 34 abgibt. Das Wärmeträgergas 36 führt dann die Reaktionskomponente in Form eines Gases mit sich und über die Leitung 102 zu dem Kondensator 104.

Im Kondensator 104 wird die gasförmige Reaktionskomponente auskondensiert und dem Kondensatorbehälter 106 zugeleitet, so daß das nunmehr von der Reaktionskomponente befreite Wärmeträgergas 36 über die Leitung 108 der Wärme-Aus- und Einkopplungseinheit 110 wiederum zugeführt wird, in dieser erhitzt wird und dann wieder in den Speicherbehälter 12 eintritt. Dieser Prozeß wird so lange durchgeführt, bis das Speichermaterial 16 die in diesem enthaltene Reaktionskomponente im wesentlichen freigesetzt hat. In diesem Zustand ist das Speichermaterial 16 aufgeladen.

Zum Entladen ist dem Speichermaterial 16 die Reaktionskomponente entwerder in gasförmiger oder flüssiger Form zuzuführen. Hierzu wird beim Kreislaufsystem 100 die kondensierte Reaktionskomponente aus dem Kondensatbehälter 106 entnommen und in dem Verdampfer 114 verdampft, wobei vorzugsweise das Wärmeträgergas in Richtung des Pfeils 126, das heißt also entgegengesetzt zur Richtung 124, in dem Kreislaufsystem 100 zirkuliert. Die somit in dem Verdampfer 114 in den gasförmigen Zustand überführte Reaktionskomponente gelangt nun gemeinsam mit dem Wärmeträgergas 36 über den zweiten Anschluß 48 in den Speicherbehälter 12 und tritt in diesem über die Stirnseiten 42 und 44 der Elemente 18 mit dem Speichermaterial 16 in Wechselwirkung, so daß es mit diesem unter Abgabe von Wärme reagiert. Diese im Speichermaterial 16 entstehende Wärme kann nun über das Wärmeträgergas 36 durch den ersten Anschluß 38 abgeführt und über die Leitung 112 der Wärme-Aus- und Einkopplungseinheit 110 zugeführt werden, in welcher die Wärmeenergie dem Wärmeträgergas 36 entzogen wird, so daß das gekühlte Wärmeträgergas wieder über die Leitung 108 durch den in diesem Fall funktionslosen Kondensator 104 zum Verdampfer 114 strömt und in diesem wierderum die gasförmige Reaktionskomponente mit sich führt.

Bei dem Kreislaufsystem 120 erfolgt beim Entladen des Speichermaterials 16 ebenfalls eine Zirkulation des Wärmeträgergases in Richtung eines Pfeiles 126, das heißt umgekehrt zur Richtung 124, wobei der Kondensatinjektor 122 die kondensierte Reaktionskomponente unmittelbar in den Speicherbehälter, beispielsweise in Form eines Sprühnebels einbringt, der dann wiederum von dem den Speicherbehälter 12 durchströmenden Wärmeträgergas 36 verteilt wird, über die Stirnflächen 42 und 44 der Elemente 18 mit dem Speichermaterial 16 reagiert, so daß sich dieses wiederum aufheizt. Die dabei entstehende Wärme wird ebenfalls durch das Wärmeträgergas 36 über die Leitung 112 der Wärme-Aus- und Einkopplungseinheit 110 zugeführt, in welcher die Wärmeenergie dem Wärmeträgergas dann entzogen wird.

Alle beschriebenen Ausführungsbeispiele arbeiten vorzugsweise mit einem Speichermaterial, welches in der beiliegenden Tabelle 1 aufgeführt ist, wobei es sich um Alkali-und Erdalkali-Oxide und -Hydroxide handelt, die alle beim Aufladen über die angegebene Temperatur T aufzuheizen sind und dabei als Reaktionskomponente gasförmiges Wasser abgeben, welches anschließend in dem Kondensator 104 kondensiert werden kann. Wie sich aus den angegebenen Temperaturen T entnehmen läßt, haben derartige Speichermaterialien den Vorteil, daß sie in der Lage sind, Energie bei sehr hohen Temperaturen zu speichern und wieder abzugeben.

Bei derartigen Speichermaterialien kommen vorzugsweise als Materialien für die Stützstruktur 14, das heißt insbesondere für die Wände 50 und 52 der Elemente 18, Keramikmaterial oder Metalle in Frage.

**Tabelle 1**

| | | | T [K] |
|---|---|---|---|
| $Mg(OH)_2$ | $\rightleftharpoons$ | $MgO + H_2O$ (gas) | 529 |
| $Ca(OH)_2$ | $\rightleftharpoons$ | $CaO + H_2O$ (gas) | 747 |
| $Sr(OH)_2$ | $\rightleftharpoons$ | $SrO + H_2O$ (gas) | (910) |
| $Ba(OH)_2$ | $\rightleftharpoons$ | $BaO + H_2O$ (gas) | (1060) |
| $LiOH$ | $\rightleftharpoons$ | $1/2\ Li_2O + 1/2\ H_2O$ (gas) | 972 |
| $NaOH$ | $\rightleftharpoons$ | $1/2\ Na_2O + 1/2\ H_2O$ (gas) | 1370 |
| $KOH$ | $\rightleftharpoons$ | $1/2\ K_2O + 1/2\ H_2O$ (gas) | (1550) |

**Patentansprüche**

1. Wärmespeicher, arbeitend mit chemischen Feststoff/Gas-Speicherreaktionen , umfassend ein in einem Behälter angeordnetes Feststoff/Gas-Reaktions-Speichermaterial, welches mittels eines Wärmeträgergases aufladbar und entladbar ist und dabei durch chemische Reaktion eine Reaktionskomponente freisetzt bzw. aufnimmt,
   **dadurch gekennzeichnet,**

daß das Speichermaterial (16) in dem Behälter (12, 62) in einer zum Wärmeträgergas (36) hin offenen Stützstruktur (14, 64) als portionierte Konfiguration und direkt vom Wärmeträgergas (36) umströmt angeordnet ist und die Reaktionskomponente in den vom Wärmeträgergas durchströmten Raum (34, 74) abgibt bzw. aus diesem aufnimmt.

2. Wärmespeicher nach Anspruch 1, dadurch gekennzeichnet, daß die offene Stützstruktur (14, 64) durch Wände (50, 52) abgetrennte, nebeneinanderliegende Fächer (54) aufweist, in denen das in der portionierten Konfiguration angeordnete Speichermaterial (16) angeordnet ist.

3. Wärmespeicher nach Anspruch 2, dadurch gekennzeichnet, daß die Fächer (54) von dem Wärmeträgergas (36) durchströmbar sind.

4. Wärmespeicher nach Anspruch 2 oder 3, dadurch gekennzeichnet, daß die Fächer (54) auf gegenüberliegenden Seiten offene Durchbrüche sind.

5. Wärmespeicher nach einem der Ansprüche 2 bis 4, dadurch gekennzeichnet, daß die Stützstruktur mehrere Fächer (54) aufweisende Elemente (18, 68) umfaßt.

6. Wärmespeicher nach Anspruch 5, dadurch gekennzeichnet, daß die Elemente (18, 68) von dem Wärmeträgergas (36) umströmt sind.

7. Wärmespeicher nach Anspruch 6, dadurch gekennzeichnet, daß die Elemente (18, 68) in dem Behälter (12, 62) im Abstand voneinander angeordnet sind.

8. Wärmespeicher nach Anspruch 7, dadurch gekennzeichnet, daß die Elemente (18) labyrinthähnliche Kanäle (34) für das Wärmeträgergas (36) zwischen sich bilden.

9. Wärmespeicher nach Anspruch 8, dadurch gekennzeichnet, daß die Elemente (18) nacheinander von dem Wärmeträgergas (36) umströmt sind.

10. Wärmespeicher nach Anspruch 7, dadurch gekennzeichnet, daß die Elemente (68) parallel zueinander vom Wärmeträgergas (36) umströmt sind.

11. Wärmespeicher nach einem der Ansprüche 1 bis 10, dadurch gekennzeichnet, daß die Stützstruktur (14, 64) aus Keramikmaterial ist.

12. Wärmespeicher nach einem der Ansprüche 1 bis 10, dadurch gekennzeichnet, daß die Stützstruktur (14, 64) aus Metall ist.

13. Wärmespeicher nach einem der voranstehenden Ansprüche, dadurch gekennzeichnet, daß das Speichermaterial (16) so beschaffen ist, daß die Reaktionskomponente bei Raumtemperatur kondensierbar ist.

14. Wärmespeicher nach einem der voranstehenden Ansprüche, dadurch gekennzeichnet, daß das Speichermaterial (16) Alkali- oder Erdalkalioxide im geladenen und Alkali oder Erdalkalihydroxide im entladenen Zustand umfaßt.

15. Wärmespeicher nach einem der voranstehenden Ansprüche, dadurch gekennzeichnet, daß das beim Aufladen des Speichermaterials (16) aus dem Behälter (12, 62) austretende Wärmeträgergas (36) über einen Kondensator (104) für die Reaktionskomponente geführt ist.

16. Wärmespeicher nach einem der voranstehenden Ansprüche, dadurch gekennzeichnet, daß das beim Entladen des Speichermaterials (16) dem Behälter (12, 62) zugeführte Wärmeträgergas (36) eine vor dem Behälter angeordnete Zuführeinrichtung (114) für die Reaktionskomponente durchströmt.

17. Wärmespeicher nach einem der Ansprüche 1 bis 15, dadurch gekennzeichnet, daß eine Zuführvorrichtung (122) vorgesehen ist, mit welcher die Reaktionskomponente beim Entladen des Speichermaterials (16) in den Behälter (12, 62) einbringbar ist.

18. Wärmespeicher nach einem der voranstehenden Ansprüche, dadurch gekennzeichnet, daß das Wärmeträgergas (36) in einem Kreislauf (100, 120) zugeführt ist und daß die Reaktionskomponente in diesem Kreislauf (100, 120) aus dem Wärmeträgergas (36) entfernbar bzw. diesem zuführbar ist.

## Claims

1. Heat accumulator operating with chemical solid/gas storage reactions, comprising a solid/gas reaction storage material arranged in a container, said material being chargeable and dischargeable by means of a heat carrier gas and thereby releasing or absorbing a reaction component due to chemical reaction, characterized in that the storage material (16) in the container (12, 62) is arranged as a portioned configuration and with the heat carrier gas (36) flowing directly around it in a support structure (14, 64) open towards the heat carrier gas (36) and said material releases the reaction component into and absorbs it from the space (34, 74) having the heat carrier gas flowing therethrough.

2. Heat accumulator as defined in claim 1, characterized in that the open support structure (14, 64) comprises adjacent compartments (54) separated by walls (50, 52), the storage material (16) arranged in the portioned configuration being arranged in said compartments.

3. Heat accumulator as defined in claim 2, characterized in that the compartments (54) are adapted to have the heat carrier gas (36) flowing through them.

4. Heat accumulator as defined in claim 2 or 3, characterized in that the compartments (54) on opposite sides are open passages.

5. Heat accumulator as defined in any of claims 2 to 4, characterized in that the support structure comprises elements (18, 68) having a plurality of compartments (54).

6. Heat accumulator as defined in claim 5, characterized in that the elements (18, 68) have the heat carrier gas (36) flowing around them.

7. Heat accumulator as defined in claim 6, characterized in that the elements (18, 68) are arranged in the container (12, 62) in spaced relation to one another.

8. Heat accumulator as defined in claim 7, characterized in that the elements (18) form between them labyrinth-like channels (34) for the heat carrier gas (36).

9. Heat accumulator as defined in claim 8, characterized in that the elements (18) have the heat carrier gas (36) flowing around them one after the other.

10. Heat accumulator as defined in claim 7, characterized in that the elements (68) have the heat carrier gas (36) flowing around them parallel to one another.

11. Heat accumulator as defined in any of claims 1 to 10, characterized in that the support structure (14, 64) is made of ceramic material.

12. Heat accumulator as defined in any of claims 1 to 10, characterized in that the support structure (14, 64) is made of metal.

13. Heat accumulator as defined in any of the preceding claims, characterized in that the properties of the storage material (16) are such that the reaction component is condensable at room temperature.

14. Heat accumulator as defined in any of the preceding claims, characterized in that the storage material (16) comprises alkaline or alkaline-earth oxides in the charged state and alkaline or alkaline-earth hydroxides in the discharged state.

15. Heat accumulator as defined in any of the preceding claims, characterized in that the heat carrier gas (36) exiting the container (12, 62) during the charging of the storage material (16) is conveyed via a condenser (104) for the reaction component.

16. Heat accumulator as defined in any of the preceding claims, characterized in that the heat carrier gas (36) supplied to the container (12, 62) during the discharging of the storage material (16) flows through a supply device (114) for the reaction component arranged in front of the container.

17. Heat accumulator as defined in any of claims 1 to 15, characterized in that a supply device (122) is provided for introducing the reaction component to the container (12, 62) during the discharging of the storage material (16).

18. Heat accumulator as defined in any of the preceding claims, characterized in that the heat carrier gas (36) is supplied in a circuit (100, 120) and that the reaction component is adapted to be removed from or fed to the heat carrier gas (36) in this circuit (100, 102).


**Revendications**

1. Accumulateur de chaleur fonctionnant sur la base de réactions chimiques d'accumulation matières solides/gaz, comprenant une matière d'accumulation réactionnelle solide/gaz disposée dans un récipient, laquelle matière peut être chargée et déchargée au moyen d'un gaz caloporteur et ce faisant, libère ou absorbe par réaction chimique un composant réactionnel,
caractérisé en ce que
la matière d'accumulation (16) est disposée dans le récipient (12, 62) dans une structure de support (14, 64) ouverte au gaz caloporteur (36) en configuration préportionnée et elle est balayée par le gaz caloporteur (36) et libère ou absorbe le composant réactionnel dans la zone (34, 74) balayée par le gaz caloporteur.

2. Accumulateur de chaleur selon la revendication 1, caractérisé en ce que la structure de support ouverte (14, 64) présente des compartiments juxtaposés (54), séparés par des parois (50, 52), compartiments dans lesquels est disposée la matière d'accumulation (16) en configuration préportionnée.

3. Accumulateur de chaleur selon la revendication 2, caractérisé en ce que les compartiments (54) peuvent être traversés ou balayés par le gaz caloporteur (36).

4. Accumulateur de chaleur selon la revendication 2 ou 3, caractérisé en ce que les compartiments (54) se situent sur des ajours ouverts sur des côtés opposés.

5. Accumulateur de chaleur selon l'une des revendications 2 à 4, caractérisé en ce que la structure de support contient plusieurs éléments (18, 68) présentant plusieurs compartiments (54).

6. Accumulateur de chaleur selon la revendication 5, caractérisé en ce que les éléments (18, 68) sont balayés par le gaz caloporteur (36).

7. Accumulateur de chaleur selon la revendication 6, caractérisé en ce que les éléments (18, 68) sont agencés dans le réservoir (12, 62) selon un certain espacement entre eux.

8. Accumulateur de chaleur selon la revendication 7, caractérisé en ce que les éléments forment entre eux des canaux (34) identiques à des labyrinthes pour le gaz caloporteur (36).

9. Accumulateur de chaleur selon la revendication 8, caractérisé en ce que les éléments (18) sont successivement balayés par le gaz caloporteur (36).

10. Accumulateur de chaleur selon la revendication 7, caractérisé en ce que les éléments (68) sont balayés pour le gaz caloporteur (36) de façon parallèle entre eux.

11. Accumulateur de chaleur selon l'une des revendications 1 à 10, caractérisé en ce que la structure de support (14, 64) est réalisée à partir d'un matériau en céramique.

12. Accumulateur de chaleur selon l'une des revendications 1 à 10, caractérisé en ce que la structure de support (14, 64) est réalisée en métal.

13. Accumulateur de chaleur selon l'une des revendications précédentes, caractérisé en ce que la matière d'accumulation (16) est de constitution telle à permettre la condensation du composant réactionnel à la température ambiante.

14. Accumulateur de chaleur selon l'une des revendications précédentes, caractérisé en ce que la matière d'accumulation (16) comprend des oxydes alcalins ou alcalino-terreux à l'état chargé et des oxydes alcalins ou alcalino-terreux à l'état déchargé.

15. Accumulateur de chaleur selon l'une des revendications précédentes, caractérisé en ce que lors du chargement de la matière d'accumulation (16), le gaz caloporteur (36) sortant du récipient (12, 62) est amené par un condenseur (104) pour le composant réactionnel.

16. Accumulateur de chaleur selon l'une des revendications précédentes, caractérisé en ce que lors du déchargement de la matière d'accumulation (16), le gaz caloporteur (36) amené au récipient (12, 62) traverse un dispositif d'amenée (114) agencé en amont du récipient pour le composant réactionnel.

17. Accumulateur de chaleur selon l'une des revendications 1 à 15, caractérisé en ce qu'il est prévu un dispositif d'amenée (122) avec lequel on peut introduire le composant réactionnel dans le récipient (12, 62) lors du déchargement de la matière d'accumulation (16).

18. Accumulateur de chaleur selon l'une des revendications précédentes, caractérisé en ce que le gaz caloporteur (36) est amené dans un circuit (100, 120) et en ce que le composant réactionnel dans ce circuit (100, 120) peut être séparé du gaz caloporteur (36) ou amené à celui-ci.

FIG.1

FIG.2

## FIG.3

FIG.4

FIG.5